# EUROPÄISCHE PATENTANMELDUNG

(11) **EP 1 215 061 A2**
(43) Veröffentlichungstag der Anmeldung: **19.06.2002**
(21) Anmeldenummer: 01129608.4
(22) Anmeldetag: 12.12.2001
(51) Int. Cl.: B60H 1/00

(54) **Busgesteuerter Stellantrieb**

(30) Priorität: 16.12.2000 DE 10062918
(71) Anmelder: Bühler Motor GmbH, 90459 Nürnberg (DE)
(72) Erfinder: Bernreuther, Georg, 90449 Nürnberg (DE); Stockfisch, Reiner, 90768 Fürth (DE)

(57) **Zusammenfassung**

Die Erfindung betrifft einen busgesteuerten Stellantrieb (1) der mit einer dem Stellantrieb (1) zugeordneten Ansteuerelektronik (2) zu einer Baueinheit zusammengefasst ist und im Verbund mit weiteren busgesteuerten Stellantrieben über ein gemeinsames Bus-Protokoll kommuniziert. Aufgabe der vorliegenden Erfindung ist es busgesteuerte Stellantriebe so auszuführen, dass sie mit einem einzigen Bus-System ansteuerbar sind, unabhängig davon, ob sie mit einem Schrittmotor oder einem Gleichstrommotor ausgestattet sind. Diese Aufgabe wird erfindungsgemäß dadurch gelöst, dass der busgesteuerte Stellantrieb zumindest eine als H-Brücke ausgeführte Leistungsendstufe (3) aufweist, von der sowohl Gleichstrommotore als auch Schrittmotore antreibbar sind.

## Beschreibung

Die Erfindung betrifft einen busgesteuerten Stellantrieb der mit einer dem Stellantrieb zugeordneten Ansteuerelektronik zu einer Baueinheit zusammengefasst ist und im Verbund mit weiteren busgesteuerten Stellantrieben über ein gemeinsames Bus-Protokoll kommuniziert.

Derartige Stellantriebe werden für Heizungs-, Lüftungs- und Umluftklappen in Klimaanlagen von Kraftfahrzeugen eingesetzt. In der Regel sind mehrere Antriebe für unterschiedliche Stellvorgänge notwendig. Dabei werden unterschiedliche Anforderungen an die Verstellgeschwindigkeit und das Verstellmoment gestellt. Eine Umluftklappe soll z. B. mit einer höheren Verstellgeschwindigkeit betreibbar sein als Heizungs- oder Lüftungsklappen. Für jede Stellaufgabe kann ein speziell daran angepasster Stellantrieb vorgesehen sein. Gebräuchlich sind Schrittmotorantriebe und Gleichstrommotorantriebe. Die unterschiedlichen Antriebstypen lassen sich aber aufgrund unterschiedlicher Ansteuerelektronik sowie Leistungs- und Endstufen nicht mit dem gleichen Bus-System ansteuem. Stand der Technik ist es unterschiedliche Bus-Systeme für die Antriebe mit Gleichstrommotor und Antriebe mit Schrittmotor zu verwenden. Klimaanlagen mit unterschiedlichen Bus-Systemen sind aufwändig zu konstruieren und schränken die Designmöglichkeiten ein.

Aufgabe der vorliegenden Erfindung ist es daher busgesteuerte Stellantriebe so auszuführen, dass sie mit einem einzigen Bus-System ansteuerbar sind unabhängig davon, ob sie mit einem Schrittmotor oder einem Gleichstrommotor ausgestattet sind.

Diese Aufgabe wird erfindungsgemäß dadurch gelöst, dass der busgesteuerte Stellantrieb zumindest eine als H-Brücke ausgeführte Leistungsendstufe aufweist, von der sowohl Gleichstrommotore als auch Schrittmotore antreibbar sind. Über die H-Brücke können bipolare Schrittmotoren und DC-Motoren angesteuert werden. Beim Schrittmotor erfolgt eine Vorgabe der Schritte. Beim Gleichstrommotor hingegen liegt ständig ein analoger Wert an einem Eingang eines A/D-Wandlers an, der die Stellung eines vom Stellantrieb angetriebenen Stellglieds darstellt. Wird die gewünschte Position erreicht - dies wird durch Vergleich des IST-Wertes mit dem SOLL-Wert realisiert, wird die H-Brücke stromlos geschaltet, und der DC-Motor kann exakt positioniert werden.

Weiterbildungen der Erfindung werden in den Unteransprüchen dargestellt. Vorzugsweise beinhaltet die Ansteuerelektronik einen Mikroprozessor, eine Standardlogik und einen A/D-Wandler. Dabei wird die Position eines durch den Stellantrieb angetriebenen Stellglieds durch einen analogen Spannungswert dargestellt, der an einem Eingang des A/D-Wandlers anliegt. Bereits die Information, ob am A/D-Wandler z.B. ein Spannungsteiler angeschlossen ist, lässt sich zur Unterscheidung zwischen Schrittmotor und Gleichstrommotor nutzen.

Zum Betrieb von bipolaren Schrittmotoren werden zwei H-Brücken benötigt. Diese kann z. B. auch dazu verwendet werden um den Gleichstrommotorantrieb als Master zu betreiben, von dem aus ein weiterer Gleichstrommotorantrieb als Slave angesteuert wird. Dadurch ist ein flexiblerer Einsatz des Stellantriebs möglich. Die beiden Gleichstrommotorantriebe können dabei völlig unabhängig voneinander gleichzeitig oder abwechselnd betrieben werden.

Die Gleichstrommotorantriebe können sowohl mit Bürstenmotoren oder mit elektronisch kommutierten Gleichstrommotoren ausgestattet sein.

Bei mehreren Stellantrieben ist es vorteilhaft diese über ein Multiplexverfahren anzusteuern, so dass jeweils ein die Stellung eines von einem beliebigen weiteren Stellantrieb angetriebenen Stellgliedes darstellender analoger Spannungswert, an dem Eingang des A/D-Wandlers anliegt.

Die Erfindung wird nachstehend anhand eines Ausführungsbeispieles näher erläutert. Es zeigen:
Fig. 1 ein Blockschaltdiagramm eines busgesteuerten Stellantriebes,
Fig. 2 eine H-Brücke und
Fig. 3 ein weiteres Blockschaltdiagramm.

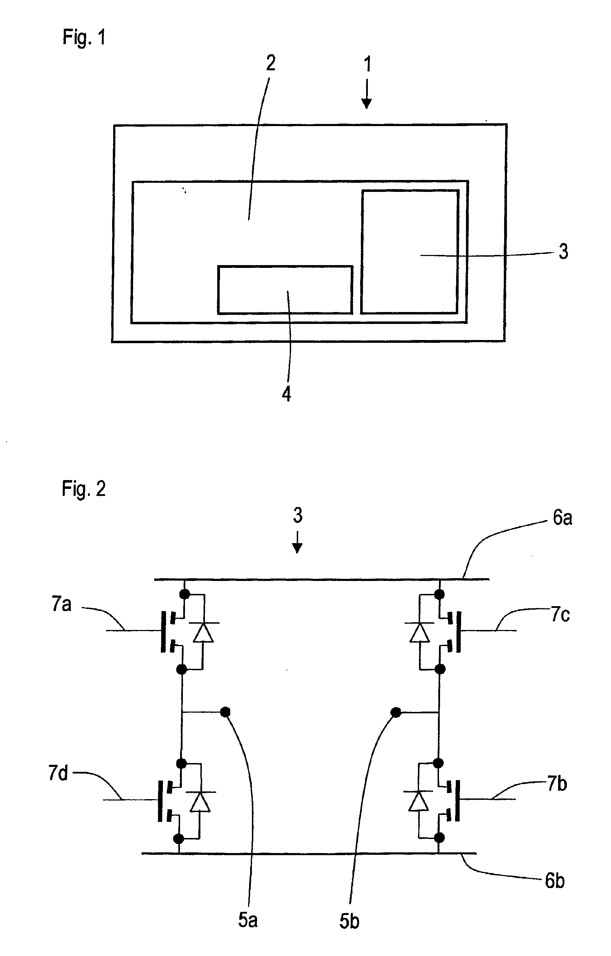

Fig. 1 zeigt ein Blockschaltdiagramm eines busgesteuerten Stellantriebes 1, mit einer Ansteuerelektronik 2, einer als H-Brücke ausgebildeten Leistungsendstufe 3 und einem A/D-Wandler 4

Fig. 2 zeigt die als H-Brücke ausgebildete Leistungsendstufe 3, bei der die Versorgungsspannung von einer Spannungsquelle über eine Leitung 6a zugeführt wird und je nach Schaltzustand über Motorklemmen 5a, 5b und einem Gleichstrommotor oder eine Spule eines bipolaren Schrittmotors zu einer Masseleitung 6b und zu der Spannungquelle zurück geleitet. Die Stromrichtung durch den Elektromotor bzw. die eine Spule des bipolaren Schrittmotors wird von Spannungszuständen an Steuerleitungen 7a, 7b, 7c und 7d bestimmt. Die Leistungstransistoren 7a und 7b sind dabei jeweils gegensätzlich zu den Leistungstransistoren 7c und 7d geschaltet. Um einen bipolaren Schrittmotor zu betreiben sind zwei H-Brücken erforderlich. Bei Vorhandensein von zwei H-Brücken lassen sich auch zwei Gleichstrommotoren unabhängig voneinander betreiben.

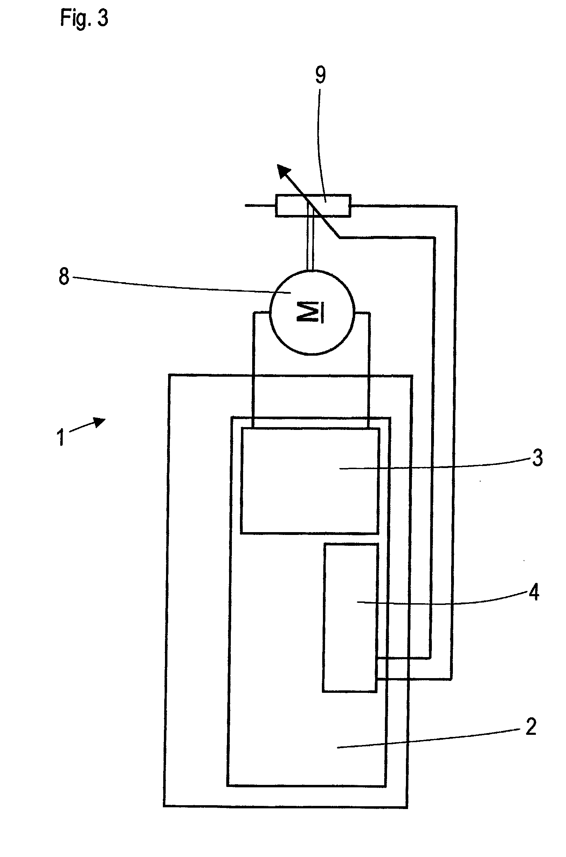

Fig. 3 zeigt ein weiteres Blockschaltdiagramm des busgesteuerten Stellantriebs 1, mit der Ansteuerelektronik 2, der H-Brücke 3 (bei bipolarem Schrittmotor zwei H-Brücken), einem A/D-Wandler 4, dessen analoge Eingänge mit einem Potentiometer 9 elektrisch verbunden sind, wobei der am Potentiometer 9 abgreifbare Spannungswert die Stellung eines Stellglieds darstellt.

### Bezugszeichenliste

- 1: Stellantrieb
- 2: Ansteuerelektronik
- 3: Leistungsendstufe (H-Brücke)
- 4: A/D-Wandler
- 5a: Motorklemme
- 5b: Motorklemme
- 6a: Versorgungsleitung
- 6b: Masseleitung
- 7a: Steuerleitung
- 7b: Steuerleitung
- 7c: Steuerleitung
- 7d: Steuerleitung
- 8: Gleichstrom- oder Schrittmotor
- 9: Potentiometer

## Patentansprüche

1. Busgesteuerter Stellantrieb (1) der mit einer dem Stellantrieb (1) zugeordneten Ansteuerelektronik (2) zu einer Baueinheit zusammengefasst ist und im Verbund mit weiteren busgesteuerten Stellantrieben über ein gemeinsames Bus-Protokoll kommuniziert, **dadurch gekennzeichnet, dass** der busgesteuerte Stellantrieb (1) zumindest eine als H-Brücke ausgeführte Leistungsendstufe (3) aufweist, von der sowohl Gleichstrommotore als auch Schrittmotore antreibbar sind.

2. Busgesteuerter Stellantrieb nach Anspruch 1, **dadurch gekennzeichnet, dass** die Ansteuerelektronik (2) einen Mikroprozessor mit A/D-Wandler (4) oder eine Standardlogik mit einem A/D-Wandler (4) beinhaltet.

3. Busgesteuerter Stellantrieb nach Anspruch 2, **dadurch gekennzeichnet, dass** die Position eines durch den Stellantrieb (1) angetriebenen Stellglieds durch einen analogen Spannungswert dargestellt wird, der an einem Eingang des A/D-Wandlers (4) anliegt.

4. Busgesteuerter Stellantrieb nach Anspruch 1, **dadurch gekennzeichnet, dass** die Leistungsendstufe (3) zwei H-Brücken beinhaltet.

5. Busgesteuerter Stellantrieb nach Anpspruch 4, **dadurch gekennzeichnet, dass** über die beiden H-Brücken ein Bipolar-Schrittmotor antreibbar ist.

6. Busgesteuerter Stellantrieb nach Anspruch 4, **dadurch gekennzeichnet, dass** über die beiden H-Brücken zwei Gleichstrommotore gleichzeitig oder abwechselnd betreibbar sind.

7. Busgesteuerter Stellantrieb nach Anspruch 6, **dadurch gekennzeichnet,** das die Gleichstrommotore Bürstenmotore oder elektronisch kommutierte Gleichstrommotore sind.

8. Busgesteuerter Stellantrieb nach Anspruch 1, **dadurch gekennzeichnet, dass** über ein Multiplexverfahren jeweils ein die Stellung eines von einem beliebigen weiteren Stellantrieb angetriebenen Stellgliedes darstellender analoger Spannungswert, an dem Eingang des A/D-Wandlers anliegt.
